# EUROPEAN PATENT SPECIFICATION

(11) **EP 2 293 401 B1**
(45) Date of publication and mention of the grant of the patent: **12.09.2018**
(21) Application number: 09014871.9
(22) Date of filing: 01.12.2009
(51) Int. Cl.: H02H 9/00, H02H 7/04

(54) **Protective system for voltage transformers**
Schutzsystem für Spannungstransformatoren
Système de protection pour transformateurs de tension

(30) Priority: 07.09.2009 EP 09460041
(43) Date of publication of application: 09.03.2011
(73) Proprietor: ABB Research Ltd., 8050 Zürich (CH)
(72) Inventor: Florkowski, Marek, 31-216 Krakow (PL); Piasecki, Wojciech, 30-009 Krakov (PL); Wahlroos, Ari, 65350 Vaasa (FI); Altonen, Janne, 37800 Toijala (FI)
(74) Representative: Kinnunen, Kari Tapio

(56) References cited:
- EP-A- 1 727 257
- EP-B1- 1 647 079
- JP-A- 2000 164 441
- US-A- 3 401 272

## Description

The subject of the invention is a protective system for voltage transformers, applicable to the attenuation of ferroresonant states occurring in voltage transformers in high and medium voltage grids.

For the attenuation of ferroresonant oscillations in electrical equipment, and especially in potential transformers which are working in three phase network, an attenuating resistor of a resistance of tens of ohms is typically used, most typically 22 ohms. Such a resistor is connected to three auxiliary secondary windings of three single-phase transformers forming an open delta circuit. Though this solution employs a simple design, it has significant disadvantages. If there is a sustained unbalance in the supply network, the small resistance value of the attenuating resistor, which is required for the effectiveness of ferroresonant oscillation attenuation, brings about the danger of thermal damage to the potential transformers or the resistor itself. In practice, attenuating resistors of a power of several hundred watts and of large dimensions are used.

The accuracy of potential transformer is defined by potential transformer accuracy class. Accuracy class is a standardized designation assigned to a transformer, which defines under prescribed conditions of use, the maximum values for voltage error and the phase displacement error. The accuracy of the measurement is of high importance as it is used in billing, control, protection and special applications, such as fault location.

Connecting a burden between open delta terminals will also harm the measuring accuracy of voltage measurement, when there is zero sequence voltage present in the network. This could be due to single phase earth fault or high degree of asymmetry in the network. The error in voltage measurement is related to the size of the burden and the magnitude of the measured voltage. Error increases with greater burden (lower resistance) and with smaller measured voltages, e.g. the faulted phase voltage during an earth fault in the network. But even with nominal voltages, the steady-state zero-sequence voltage is enough to harm the voltage measurement so that the measurement accuracy defined by accuracy class cannot be guaranteed.

From the EP patent No. 1647079 there is known a protecting system for medium-voltage potential transformer protection comprising an attenuating resistor connected into the open delta system of three auxiliary secondary windings of three single-phase transformers, which is deactivated by a switching device. Switching device has a form of a thermal fuse which is connected in series between the output of the auxiliary secondary windings of one of the single-phase transformers and the attenuating resistor by means of an element of with a threshold voltage and current characteristic. In one of the embodiments of the presented solution the thermal fuse has the form of a PTC resistor and the element with threshold voltage and current characteristic has the form of two Zener diodes push-pull connected with one another.

During a prolonged zero-sequence voltage presence e.g. resulting from a prolonged earth-fault, the thermal fuse element limits significantly the current loading the voltage transformers, protecting them from a thermal damage.

The thermal fuse remains in the non-conductive state or high-ohmic state for the time needed for cooling down. This takes place normally when the system is disconnected in order to clear the earth-fault.

There is known from a German patent description DE 1 265 836, a circuit for damping relaxation oscillations in a single-pole, grounded inductive potential transformer in a three phase network. In this circuit an attenuating resistor is connected to the open-delta arranged auxiliary windings of the three single-phase transformers by the working contacts of the three relays. The working contacts are activated by secondary windings of the transformers. The use of such relays makes it possible to disconnect the attenuating resistor in the case of the network unbalance which is caused by en earth-fault.

The disadvantage of this solution is the need to use electromechanical elements such as relays and the necessity to control them by additional secondary windings of the transformers.

The thermal fuse remains in the non-conductive state or high-ohmic state for the time needed for cooling down This takes place normally when the system is disconnected in order to clear the earth-fault.

There is known from a German patent description DE 1 265 836, a circuit for damping relaxation oscillations in a single-pole, grounded inductive potential transformer in a three phase network. In this circuit an attenuating resistor is connected to the open-delta arranged auxiliary windings of the three single-phase transformers by the working contacts of the three relays. The working contacts are activated by secondary windings of the transformers. The use of such relays makes it possible to disconnect the attenuating resistor in the case of the network unbalance which is caused by en earth-fault.

European Patent Application EP 1727257 suggests a protection circuit for potential transformers, wherein a damping resistor and a thermal protection element of a PTC thermistor are connected into the circuit of the open-delta arranged auxiliary windings of the three single phase potential transformers by means of a an electronic switching element or a circuitry so that exceeding the threshold voltage at the terminals of the open-delta arranged auxiliary windings of the three single phase potential transformers turns the switching element or the circuitry into its conductive state.

The disadvantage of this solution is the need to use electromechanical elements such as relays and the necessity to control them by additional secondary windings of the transformers.

The solution is not optimal, as a damping resistor is most of the time connected in the open-delta terminals. Thus in case of unsymmetrical network, where a substantial healthy state zero sequence voltage is present, then the damping resistor affects negatively into phase voltage measurement accuracy. Also, in practice, it takes some time to open the relay working contacts, and during this time the voltage measurement is negatively affected by the loading of the open-delta winding. This is not optimal considering state-of-art protection functions and special applications, e.g. earth fault location.

The essence of the inventive system for voltage transformers comprising a damping burden (3) connected into an open delta system of three auxiliary secondary windings of three single-phase transformers, which is activated and deactivated by a switching element connected in series with the damping burden, is that the switching element has a control input, connected to an output of control means suitable for controlling a time sequence of deactivating the damping burden, by controlling the conductive and non conductive states of the switching element. Preferably the protective system comprises a bridge rectifier which is connected between the inputs of the power supply unit and the open-delta terminals of the auxiliary windings of the three single phase voltage transformers.

The essence of the method of protecting of voltage transformers in an open delta system of three auxiliary secondary windings of three single-phase transformers against ferroresonant oscillations, is that the protecting system of any of the claims 1-7 is used in such a way that when the zero-sequence voltage U exceeds a predefined threshold value, the activation of the damping burden takes places after a predefined time td.

The advantage of the present invention is that the connecting and disconnecting of the damping burden to the open-delta arranged auxiliary windings is performed using a switching element which is controlled by a control block preferably comprising a microcontroller. The control block thanks to a dedicated algorithm makes it possible to avoid unnecessary permanent connection of the damping burden to the open-delta terminals, and thus prevents the risk of thermal damage both of the damping burden and of the voltage transformers under a prolonged earth fault condition. It also ensures that in the event of clearing the fault resulting in the potential ferroresonance, the device is active and ready to damp the unwanted oscillations and no additional time for cooling is needed.

In addition to the above it is also possible to introduce a predefined delay time t_{d} from the instant t₀ when the zero-sequence voltage U exceeds a predefined threshold level to the instant of connecting of the damping burden. This allows one to filter out a temporary presence of the zero-sequence voltage. In the event of the earth fault, within the time t_{d} the damping burden is also not connected and thus the output signals of the voltage transformers are not distorted by overloading the voltage transformers by the damping burden. This is particularly important if the zero-sequence voltage measured at the open-delta terminals is used as the input signal for the earth fault protection relay.

Yet another advantage of the present invention is that the control block thanks to the dedicated algorithm may control the connecting and the disconnecting of the damping burden using a PWM (Pulse Width Modulation) technique so that the effective damping burden may vary in a gradual way, allowing one to avoid unnecessary transients in the network.

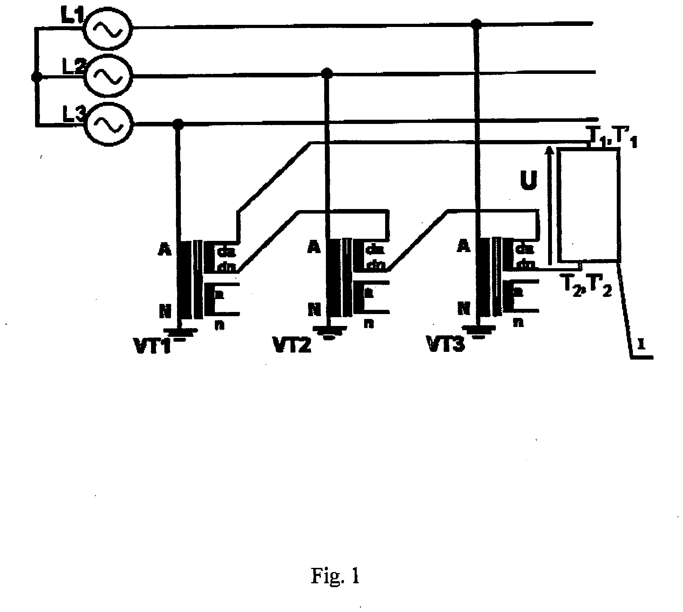

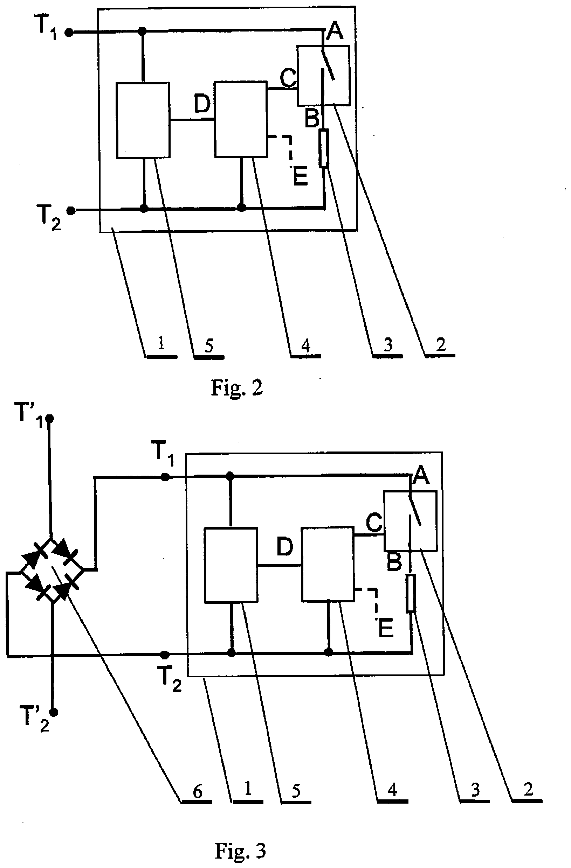

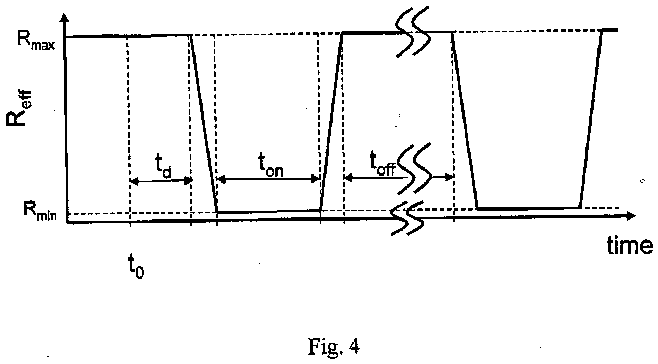

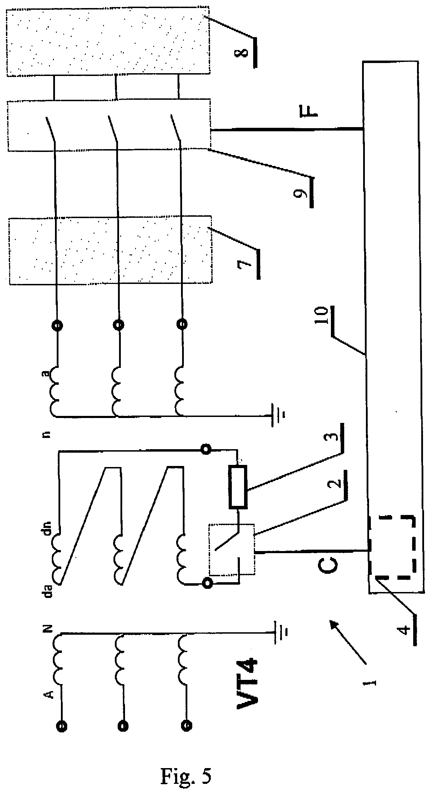

The subject of the invention is presented in an embodiment in the drawing, where fig. 1 shows a system of potential transformers connected to a protecting system, fig. 2 - schematic diagram of protecting system according to the first embodiment, fig 3- schematic diagram of protecting system according to the second embodiment, fig. 4 - time dependence of the effective resistance value R_{eff} of the damping burden, fig. 5 schematic diagram of protecting system according to the third embodiment.

The auxiliary windings of three single-phase potential transformers VT1, VT2, VT3 are connected with one another to form an open delta arrangement Primary windings A-N are directly connected with a three-phase network phase conductors L₁, L₂, L₃, and earth. The terminals of the secondary windings a-n of the individual transformers are the working outputs of these transformers. The auxiliary secondary windings da and dn of the transformers are connected with one another in such way that the terminal da of the auxiliary secondary winding of the transformer VT1 is connected with the first input T₁ or T'₁ of the protection system 1, whose second input T₂ or T'₂ is connected with the terminal dn of the auxiliary secondary winding of the third transformer VT3, and whose terminal da is connected with the terminal dn of the auxiliary secondary winding of the second transformer VT2. Next, the terminal da of the second transformer VT2 is connected with the terminal dn of the first transformer VT1. During the device operation, between the terminal da of the first transformer VT1 and the terminal dn of the third transformer VT3 voltage U appears, which is applied to the terminals T₁ and T₂ or T'₁ and T'₂ of the protection system 1.

Protection system 1 in the first embodiment of the invention comprises a switching element 2 connected in series with the damping burden 3 to the terminals T₁ and T₂ which have in this embodiment the function of connecting terminals of the protective system 1. The switching element 2 has two main terminals A, B, and a control terminal C. The damping burden 3 is connected in series with the switching element 2 through the main terminals A,B. The control terminal C is connected to the output of the control block 4.

The control block 4 has a power input D which is connected to the output of the power supply unit 5, whose inputs are connected to the terminals T₁ and T₂. The power supply unit 5 provides the DC voltage level appropriate for operation of the control block 4 when the amplitude of the zero-sequence voltage U exceeds the predefined threshold value.

In the second embodiment of the invention the terminals T₁ and T₂ are connected to the DC outputs of a rectifier bridge 6, whose AC inputs are connected to the terminals T'₁ and T'₂ which have in this embodiment the function of the connecting terminals of the protective system.

The control block 4 has a form of a microcontroller system. The control block 4 is powered up when the zero-sequence voltage U exceeds a predefined threshold value, which takes place at the instant t₀. The role of the control block is to provide a time sequence of deactivating the damping burden 3 by controlling the conductive and nonconductive states of the switching element 2.

The first instance of the connecting of the damping burden 3 takes place after a predefined time t_{d} from the time tₒ necessary to:
- filter out short-time transient disturbances or/and
- ensure that the output signals from the voltage transformers VT1, VT2, and VT3 are not unnecessarily disturbed by the presence of high burden, which could affect the performance of the protection relays, which could utilize the output signal from the voltage transformers.

Preferably the control block 4 is formed by a microcontroller system comprising a Pulse Width Modulation (PWM) generator enabling a gradual change of the effective damping burden resistance value R_{eff} by producing a high frequency signal controlling the conductive state of the switching element 2. The parameters of the output signal from the PWM generator are variable in time according to a programmed scheme, in order to obtain gradual connection and disconnection of damping burden 3 resulting in gradual change in the R_{eff}.

The operation of the protection system according to the invention in both embodiments of the invention is as follows. If the value of the zero-sequence voltage U exceeds a predefined threshold level U₀, which takes place in the event of the ferroresonant oscillations, the power supply unit 5 starts to power-up the control block 4. After a predefined time t_{d} set up in order to filter out a temporary exceeding of the zero-sequence voltage U the predefined threshold value the control block 4 starts to connect and disconnect the damping burden 3 to the open-delta terminals of the voltage transformers VT1, VT2, VT3 by means of controlling the conductive state of the switching element 2 through its control input C.
The periods when the damping burden is connected tₒₙ and disconnected t_{off} are selected so that upon the continuous presence of the zero-sequence voltage level U exceeding the predefined threshold value, resulting for example from the prolonged earth fault, neither the voltage transformers, nor the damping burden become overheated.

The connecting and disconnecting of the damping burden 3 is performed by means of the PWM modulation so that the effective resistance value R_{eff} of the damping burden 3 resistance changes in a gradual way between the Rₘᵢₙ and Rₘₐₓ values so that unnecessary transients in the voltage transformer outputs are avoided.

An additional output signal E from the control block 4 to the intelligent electronic device (IED) 10 could be connected for indicating if the damping burden 3 is connected to avoid erroneous voltage measurements. The signal E could be transferred via a galvanic connection with e.g. a copper wire or an optical fibre or even a wireless connection link could be used. The digital signal E about a status of the switch of the switching element 2 could also be replaced with indication of the electric current through the damping burden 3 exceeding a threshold value. For this function the switching element 2 could preferably have a shunt resistor, the analogue voltage over the shunt resistor is connected to the control block 4 equipped with an A/D converter or an electronics comparator circuit.

Another embodiment of the invention is a protection system 1 where the control block 4 functions are integrated in a programmable IED 10 like a protection relay used e.g. for the earth fault protection. The input signal D from the power supply unit 5 could be used for the IED 10, but an IED 10 having a U₀ voltage measurement itself the voltage measuring data is preferably used for detecting a ferroresonant oscillation. The signal C for controlling the switching element 2 will be transferred from the IED 10. The benefit of IED 10 having a full control for the switching element 2 is to ensure correct voltage measurements without damping burden 3 connected. The delay t_{d} could be dynamic i.e. the damping burden 3 could be connected immediately after the voltage measurements have been done.
Typically there are different types of burdens connected to the secondary windings of the potential transformers VT1, VT2 and VT3 or a three phase potential transformer VT4. Some of them are burdens 7 like the voltage measurement circuits of the IED 10 to be continuously connected but still there could be also burdens 8, which are disconnectable when accurate voltage measurements are required. One example of these burdens 8 could be a signal level measurement circuits of the ripple control system. The disconnection of the lower priority burdens 8 is made by a switching element 9 controlled via a control link F by the IED 10.

## Claims

1. A protecting system for voltage transformers comprising a damping burden (3) connected into an open delta system of three auxiliary secondary windings of three single-phase transformers (VT1, VT2, VT3), or one three-phase transformer (VT4) comprising a switching element (2) connected in series with the damping burden (3), **characterised in that** the switching element (2) has a control input (C) connected to an output of control means suitable for controlling a time sequence of activating and deactivating of the damping burden (3) by controlling the conductive and nonconductive states of the switching element (2) by a control block (4), which is activated after a predefined time (t_{d}) after the amplitude of the zero-sequence voltage U has exceeded a predefined threshold value.

2. A protecting A protecting system accordingsystem according claim 1, **characterised in that** the control means have a form of a controla control block (4) having one pair of power supply inputs connected to outputs ofoutputs of a power supply unit (5) whose inputs are connected to the open-delta terminals (T1, T2) or (T1', T2') of the auxiliary windings of the three single phase voltage transformers (VT1, Vt2VT2, VT3) or one three-phase voltage transformer (VT4).

3. A protecting system according to claim 2, **characterised in that** the control block (14) comprises a PWM (Pulse Width Modulation) generator.

4. A protecting system according claim 1-3, **characterised in that** it comprises a bridge rectifier (5) which is connected between the inputs of the power supply unit (4) and the open-delta terminals (T1',T2') of the auxiliary windings of the three single phase voltage transformers (VT1, Vt2VT2, VT3) or one three-phase voltage transformer (VT4).

5. A protecting system according to claim 1-4, **characterised in that** the control block (4) is arranged to send an indication signal (E) to the intelligent electronic device (610) of damping burden (3) being connected or the electric current through the damping burden (3) being over a threshold value.

6. A protecting system according claim 1-4, **characterised in that** the control block (4) is integrated in an intelligent electronic device (610).

7. A protecting system according to claim 6, **characterised in that** the burdens of the secondary windings of the potential transformer (VT1, VT2, VT3, VT4) are arranged in at least two blocks (7,8) where at least one block (8) is disconnectable by the intelligent electronic device (610).

## Patentansprüche

1. Schutzsystem für Spannungstransformatoren umfassend eine dämpfende Last (3), die in ein offenes Dreieckssystem mit drei Hilfssekundärwicklungen von drei Einzelphasentransformatoren (VT1, VT2, VT3) oder einem Dreiphasentransformator (VT4) umfassend ein Schaltelement (2), das in Reihe mit der dämpfenden Last (3) geschaltet ist, geschaltet wird, **dadurch gekennzeichnet, dass** das Schaltelement (2) einen Steuereingang (C) aufweist, der mit einem Ausgang von Steuermitteln verbunden ist, die sich zur Steuerung einer Zeitsequenz zum Aktivieren und Deaktivieren der dämpfenden Last (3) eignen, indem die leitfähigen und nicht leitfähigen Zustände des Schaltelements (2) durch einen Steuerblock (4) gesteuert werden, der nach einer vordefinierten Zeit (t_{d}), nachdem die Amplitude der Nullsystemspannung U einen vordefinierten Schwellenwert überschritten hat, aktiviert wird.

2. Schutzsystem nach Anspruch 1, **dadurch gekennzeichnet, dass** die Steuermittel eine Form eines Steuerblocks (4) besitzen, der ein Paar von Leistungsversorgungseingängen, die mit Ausgängen einer Leistungsversorgungseinheit (5) verbunden sind, deren Eingänge mit den offenen Dreiecksanschlüssen (T1, T2) oder (T1', T2') der Hilfswicklungen der drei Einzelphasen-Spannungstransformatoren (VT1, VT2, VT3) oder des einen Dreiphasen-Spannungstransformators (VT4) verbunden sind, aufweist.

3. Schutzsystem nach Anspruch 2, **dadurch gekennzeichnet, dass** der Steuerblock (4) einen PWM(Pulsweitenmodulation)-Generator umfasst.

4. Schutzsystem nach den Ansprüchen 1-3, **dadurch gekennzeichnet, dass** es einen Brückengleichrichter (5) umfasst, der zwischen den Eingängen der Leistungsversorgungseinheit (4) und den offenen Dreiecksanschlüssen (T1', T2') der Hilfswicklungen der drei Einzelphasen-Spannungstransformatoren (VT1, VT2, VT3) oder des einen Dreiphasen-Spannungstransformators (VT4) geschaltet ist.

5. Schutzsystem nach den Ansprüchen 1-4, **dadurch gekennzeichnet, dass** der Steuerblock (4) dazu eingerichtet ist, ein Indikationssignal (E) zu der intelligenten elektronischen Einrichtung (10) zu senden, dass die dämpfende Last (3) verbunden ist oder der elektrische Strom durch die dämpfende Last (3) über einem Schwellenwert liegt.

6. Schutzsystem nach den Ansprüchen 1-4, **dadurch gekennzeichnet, dass** der Steuerblock (4) in einer intelligenten elektronischen Einrichtung (10) integriert ist.

7. Schutzsystem nach Anspruch 6, **dadurch gekennzeichnet, dass** die Lasten der Sekundärwicklungen des Potentialtransformators (VT1, VT2, VT3, VT4) in mindestens zwei Blöcken (7, 8) eingerichtet sind, wobei mindestens ein Block (8) durch die intelligente elektronische Einrichtung (10) abgetrennt werden kann.

## Revendications

1. Système de protection pour transformateurs de tension comprenant une charge d'amortissement (3) connectée dans un système à triangle ouvert de trois enroulements secondaires auxiliaires de trois transformateurs monophasés (VT1, VT2, VT3), ou d'un transformateur triphasé (VT4) comprenant un élément de commutation (2) monté en série avec la charge d'amortissement (3), **caractérisé en ce que** l'élément de commutation (2) a une entrée de commande (C) connectée à une sortie de moyens de commande aptes à commander une séquence temporelle d'activation et de désactivation de la charge d'amortissement (3) en contrôlant les états conducteur et non conducteur de l'élément de commutation (2) par un bloc de contrôle (4), qui est activé après un temps prédéfini (t_{d}) après que l'amplitude de la tension U de la séquence zéro a dépassé une valeur de seuil prédéfinie.

2. Système de protection selon la revendication 1, **caractérisé en ce que** les moyens de commande ont la forme d'un bloc de commande (4) ayant une paire d'entrées d'alimentation connectées aux sorties d'une unité d'alimentation (5) dont les entrées sont connectées aux bornes en triangle ouvert (T1, T2) ou (T1', T2') des enroulements auxiliaires des trois transformateurs de tension monophasés (VT1, VT2, VT3) ou d'un transformateur de tension triphasé (VT4).

3. Système de protection selon la revendication 2, **caractérisé en ce que** le bloc de commande (4) comprend un générateur à modulation de largeur d'impulsion PWM.

4. Système de protection selon les revendications 1 à 3, **caractérisé en ce qu'**il comprend un pont redresseur (5) qui est connecté entre les entrées de l'unité d'alimentation électrique (4) et les bornes en triangle ouvert (T1', T2') des enroulements auxiliaires des trois transformateurs de tension monophasés (VT1, VT2, VT3) ou d'un transformateur de tension triphasé (VT4) .

5. Système de protection selon les revendications 1 à 4, **caractérisé en ce que** le bloc de commande (4) est conçu pour envoyer un signal d'indication (E) au dispositif électronique intelligent (10) lorsque la charge d'amortissement (3) est connectée ou que le courant électrique traversant la charge d'amortissement (3) a une valeur supérieure à une valeur de seuil.

6. Système de protection selon les revendications 1 à 4, **caractérisé en ce que** le bloc de commande (4) est intégré dans un dispositif électronique intelligent (10) .

7. Système de protection selon la revendication 6, **caractérisé en ce que** les charges des enroulements secondaires du transformateur de potentiel (VT1, VT2, VT3, VT4) sont agencées en au moins deux blocs (7, 8) où au moins un bloc (8) peut être déconnecté par le dispositif électronique intelligent (10).
